# EUROPÄISCHE PATENTSCHRIFT

(11) **EP 2 810 799 B1**
(45) Veröffentlichungstag und Bekanntmachung des Hinweises auf die Patenterteilung: **25.04.2018**
(21) Anmeldenummer: 14001859.9
(22) Anmeldetag: 28.05.2014
(51) Int. Cl.: B21C 23/14, B60G 7/00

(54) **Verfahren zum Herstellen eines Fahrwerkslenkers und Fahrwerkslenker für ein Fahrzeug**
Method for producing a suspension arm and suspension arm for a vehicle
Procédé de fabrication d'un bras de suspension et bras de suspension pour un véhicule

(30) Priorität: 05.06.2013 DE 102013009426
(43) Veröffentlichungstag der Anmeldung: 10.12.2014
(73) Patentinhaber: AUDI AG, 85045 Ingolstadt (DE)
(72) Erfinder: Ottinger, Andreas, 86641 Rain/Überacker (DE); Idelevitch, Vladimir, 90441 Nürnberg (DE); Schantl, Gilbert, 80802 München (DE)

(56) Entgegenhaltungen:
- EP-A1- 1 642 754
- EP-A1- 2 455 244
- EP-A1- 3 031 637
- DE-A1-102004 042 964
- DE-A1-102008 047 015
- DE-B3-102011 055 993

## Beschreibung

Die vorliegende Erfindung betrifft ein Verfahren zur Herstellung eines Fahrwerkslenkers für ein Fahrzeug, umfassend das Bereitstellen eines Halbzeugs aus einem Strangpressprofil mit einem Bodensteg, von dem ausgehend zwei Seitenstege unter Ausbildung eines dazwischenliegenden Freiraums abstehen und dem Fügen der Seitenstege mit einer diese verbindenden Versteifungsplatte, sowie ein Fahrzeug mit mindestens einem solchen Fahrwerkslenker.

Derartige Fahrwerkslenker, auch Querlenker oder einfach Lenker genannt, werden im Fahrzeugbau als Teil der Radaufhängung verwendet. Die Radaufhängung verbindet das Rad mit der Karosserie und führt es unter Gewährung bestimmter Freiheitsgrade. Solche Fahrwerkslenker können im Sinne des Leichtbaus auch aus Strangpressprofilen, beispielsweise einem Aluminium-Strangpressprofil, erzeugt werden.

Die EP 2 455 244 A1 offenbart ein Verfahren zur Herstellung eines Lenkerarms zur Anordnung an einer Kraftfahrzeugachse, wobei der Lenkerarm als einstückiges Umformbauteil aus einem Leichtmetallstrangpressprofil hergestellt wird. Das Verfahren umfasst die Schritte Bereitstellen eines Halbzeuges aus einem Leichtmetallstrangpressprofil, welches eine Pi-förmige Querschnittskonfiguration mit einem Bodensteg und sich von dem Bodensteg erstreckenden Seitenstegen und gegenüber den Stegen abstehende Schenkel besitzt, Schneidetechnisches Bearbeiten des Halbzeuges, Einbringen von Lageraufnahmeöffnungen, Abschnittsweises Aufweiten des bearbeiteten Halbzeuges. Weiterhin wird ein Lenkerarm zur Anordnung an einer Kraftfahrzeugachse, welcher nach dem erfindungsgemäßen Verfahren hergestellt ist, beschrieben. Die DE 10 2010 051 741 A1 zeigt ein ähnliches Verfahren zur Herstellung eines Fahrwerkslenkers aus einem Strangpressprofil mit offenem Querschnittsprofil.

Nach einem Verfahren des Stands der Technik hergestellte Fahrwerkslenker weisen den Nachteil auf, dass sie durch die offene Profilform eine eher geringe Steifigkeit aufweisen. Diesem Missstand wird dadurch entgegnet, dass eine oder mehrere Versteifungsplatten zwischen den Seitenstegen angeordnet werden, woraus zumindest abschnittsweise ein geschlossener Profilquerschnitt mit verbesserten Steifigkeitseigenschaften resultiert.

So zeigt die DE 10 2011 055 993 B3 einen gattungsgemäßen Fahrwerkslenker, wobei die Versteifungsplatte mittels elektromagnetischem Pulsschweißen mit den Seitenstegen gefügt wird. Dies hat den Nachteil, dass der Herstellungsaufwand insgesamt erhöht wird.

Aufgabe der vorliegenden Erfindung ist es daher ein Verfahren zur Herstellung eines Fahrwerkslenkers und einen Fahrwerkslenker für ein Fahrzeug bereitzustellen, mit dem ein Strangpressprofil mit offenem Profilquerschnitt einfach mit einer Versteifungsplatte gefügt werden kann.

Diese Aufgabe wird durch die Merkmale des Patentanspruchs 1 gelöst.

Ein Fahrwerkslenker für ein Fahrzeug ist in Patentanspruch 9 beansprucht.

Ein Verfahren zur Herstellung eines Fahrwerkslenkers für ein Fahrzeug umfasst die folgenden Schritte:
- Bereitstellen eines Halbzeugs aus einem Strangpressprofil mit einem Bodensteg, von dem ausgehend zwei Seitenstege unter Ausbildung eines dazwischenliegenden Freiraums abstehen;
- Einbringen jeweils einer Aufnahme in die Seitenstege;
- Einführen einer Versteifungsplatte, die von den Aufnahmen gehalten wird;
- Verformen der Seitenstege zur (formschlüssigen) Fixierung der Versteifungsplatte in den Aufnahmen.

Indem eine Versteifungsplatte in die von den Seitenstegen ausgebildeten Aufnahmen eingeführt und durch einen anschließenden Biegevorgang (formschlüssig) in diesen fixiert wird, kann auf einfache Art und Weise ein Strangpressprofil mit einem offenen Querschnitt (beispielsweise einem U-förmigen oder einem Pi-förmigen Querschnitt) abschnittsweise von einer Versteifungsplatte ausgesteift werden. Die Möglichkeit einer nur abschnittsweisen Versteifung durch die Versteifungsplatte erlaubt eine Gewichtsreduzierung durch die gezieltere Anordnung an besonders belasteten Stellen des Bauteils. Selbstverständlich können auch mehrere einzelne Versteifungsplatten angeordnet werden. Gleichermaßen können von dem Bodensteg auch mehr als zwei Seitenstege abragen, wobei mindestens zwei dieser Seitenstege mit der Versteifungsplatte ausgesteift werden können. Das vorliegende Verfahren eignet sich für alle möglichen Materialkombinationen, da eine stoffschlüssige Verbindung mit den damit einhergehenden metallurgischen Problemen nicht notwendig ist.

In einer bevorzugten Ausführung erfolgt das Verformen der Seitenstege durch ein Biegen des Strangpressprofils um eine Querachse. Dabei kann das Bauteil als Ganzes oder lediglich stellenweise durch einen Stempel verbogen werden. Es ist lediglich darauf zu achten, dass die Seitenstege ausreichend auf die Versteifungsplatte gepresst werden und gegebenenfalls sogar in diese einscheren, damit ein zuverlässiger Formschluss gewährleistet ist.

In einer bevorzugten Ausführung erfolgt das Verformen der Seitenstege durch ein Eindrücken der Seitenstege entlang einer Querachse des Strangpressprofils. Durch die Materialschwächung der Aufnahmen werden diese beim Eindrücken des entsprechenden Seitenstegs so verformt, dass sie in die Versteifungsplatte einscheren.

In einer bevorzugten Ausführung sind die Aufnahmen als Durchbrüche in den Seitenstegen ausgebildet. Die Durchbrüche sind beiderseits in den Seitenstegen zueinander fluchtend ausgebildet, so dass die Versteifungsplatte in Querrichtung einführbar ist. Der Vorteil der Durchbrüche ist die klare Positionierung der Versteifungsplatte in Längsrichtung des Fahrwerkslenkers. Die Durchbrüche können durch einen schneidetechnischen Verfahrensschritt erzeugt werden. Hierzu eignen sich beispielsweise Stanzprozesse, Fräsprozesse, Wasserschneiden oder Laserschneiden. Es ist besonders vorteilhaft, wenn durch diesen schneidtechnischen Verfahrensschritt eine Oberflächenvergrößerung durch Konturierung der Durchbrüche erfolgt, da sich diese dann beim Verformen der Seitenstege besser mit der Versteifungsplatte verzahnen können.

In einer bevorzugten Ausführung sind die Aufnahmen als einander gegenüberliegende Nuten an den Innenseiten der Seitenstege ausgebildet. Die Nuten sind vorzugsweise bereits während des Strangpressvorgangs in das Halbzeug einzubringen. Dabei kann je nach der zur Verfügung stehenden Materialdicke der Seitenstege auch eine Wulst auf zumindest einer Innenseite der Seitenstege aufgebaut werden. Eine Wulst hat den Vorteil, dass keine zusätzliche Schwächung des entsprechenden Seitensteges durch die Nut entsteht. Durch die hervorstehende Wulst an der einander zugewandten Innenseite der Seitenstege kann die Verformung gezielt in die Wulst eingebracht werden, ohne die Seitenstege oder den Bodensteg nennenswert zu verformen. Zur Verformung der Wulst kann mit einem Stempelwerkzeug drückend auf diese eingewirkt werden, um die Nut dadurch etwas zu schließen und so die Versteifungsplatte zu fixieren. Denkbar ist auch die Versteifungsplatte nach dem Einführen in die Aufnahmen entlang seiner Längsachse zu verformen. Generell ist darauf zu achten, dass die Nut vor dem Einführen der Versteifungsplatte absolut gerade ist, da ansonsten die Gefahr eines Verkantens entsteht.

In einer bevorzugten Ausführung folgen die Aufnahmen der Längserstreckung des Fahrwerkslenkers zumindest abschnittsweise. Dies bedeutet, dass die Versteifungsplatte im Wesentlichen parallel zum Bodensteg verläuft.

Ein Fahrwerkslenker für ein Fahrzeug, der nach einem erfindungsgemäßen Verfahren hergestellt wird, kann ein Strangpressprofil aus einer Aluminiumlegierung aufweisen. Die Versteifungsplatte kann aus einer Eisenlegierung oder einer Aluminiumlegierung bestehen.

Weitere Einzelheiten und Vorteile der Erfindung ergeben sich aus der nachstehenden Beschreibung eines bevorzugten Ausführungsbeispiels unter Bezugnahme auf die Zeichnungen.

Darin zeigen:
Fig. 1 eine Draufsicht und eine Seitenansicht einer ersten Ausführungsform des Fahrwerkslenkers;
Fig. 2 eine Schnittansicht einer ersten Ausführungsform des Fahrwerkslenkers;
Fig. 3 eine Seitenansicht einer zweiten Ausführungsform des Fahrwerkslenkers;
Fig. 4 eine Schnittansicht einer zweiten Ausführungsform des Fahrwerkslenkers.

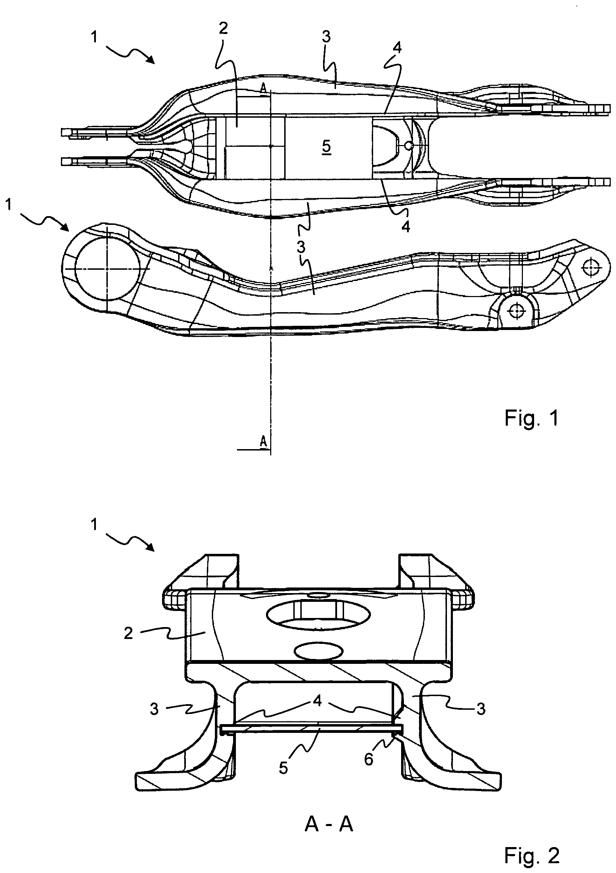

Gemäß der Fig. 1 hat eine erste Ausführungsform des Fahrwerkslenkers 1 einen Bodensteg 2, der als Basis für zwei davon unter Ausbildung eines dazwischenliegenden Freiraums abstehende Seitenstege 3 dient. Die Seitenstege 3 weisen an ihren jeweiligen Innenseiten jeweils eine Aufnahme 4 in Form einer Nut auf, in der eine Versteifungsplatte 5, zur abschnittsweisen Versteifung der beiden Seitenstege 3 gegeneinander, gehalten ist. Die Aufnahmen 4 erstrecken sich der Längserstreckung des Fahrwerkslenkers 1 über dessen gesamte Länge folgend und werden bevorzugt bereits während des Strangpressvorgangs in diesen eingebracht. In den Fahrwerkslenker 1 wurden in weiteren Verfahrensschritten noch Lageröffnungen und Freischnitte eingebracht, die für die vorliegende Erfindung jedoch nicht weiter relevant sind.

Fig. 2 zeigt einen Schnitt entlang der Quererstreckung des Fahrwerkslenkers 1 aus Fig. 1. Daraus lässt sich der vorliegend Pi-förmige Querschnitt des Strangpressprofils mit einem die Seitenstege 3 beiderseits leicht überragenden Bodensteg 2 erkennen. Die abstehenden Enden der Seitenstege 3 sind vorliegend nach außen gebogen. In der Fig. 2 sind zwei verschiedene Arten einer nutförmigen Aufnahme 4 offenbart: linksseitig dringt die Aufnahme 4 tiefer in den Seitensteg 3 ein, so dass dieser oberflächlich flach bleiben kann, während rechtsseitig eine Wulst 6 die Aufnahme 4 bildet. Beiden Aufnahmen 4 gemein ist, dass ein Sporn in diese einragt. Wird die Versteifungsplatte 5 in das als Strangpressprofil ausgebildete Halbzeug in Längsrichtung eingeschoben und anschließend das Strangpressprofil um eine Querachse verbogen, so drückt sich der Sporn in die Versteifungsplatte 5 und verbessert dadurch den Formschluss.

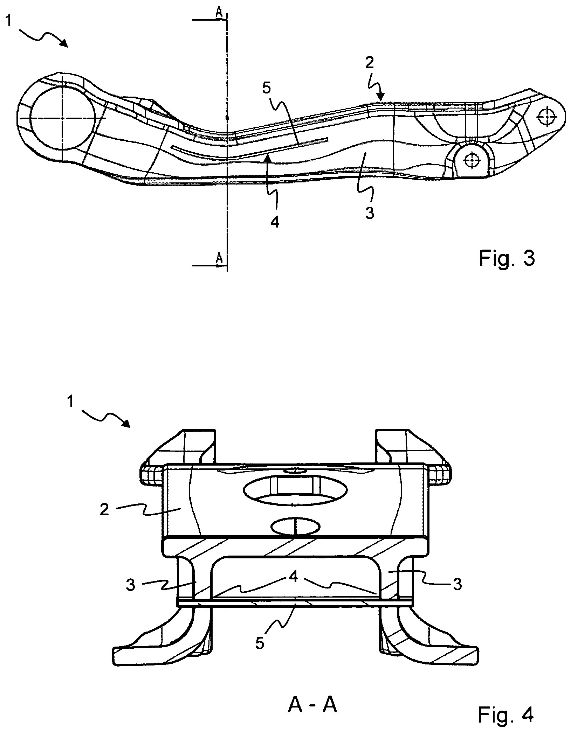

Gemäß der Fig. 3 hat eine zweite Ausführungsform des Fahrwerkslenkers 1 einen Bodensteg 2, der als Basis für zwei davon unter Ausbildung eines dazwischenliegenden Freiraums abstehende Seitenstege 3 dient. Die Seitenstege 3 weisen jeweils eine Aufnahme 4 in Form eines Durchbruchs auf, in den eine Versteifungsplatte 5, zur abschnittsweisen Versteifung der beiden Seitenstege 3 gegeneinander, gehalten ist. Die Aufnahmen 4 erstrecken sich teilweise der Längserstreckung des Fahrwerkslenkers 1 folgend und werden in einem an den Strangpressvorgang anschließend Verfahrensschritt in diesen eingebracht. In den Fahrwerkslenker 1 wurden in weiteren Verfahrensschritten noch Lageröffnungen und Freischnitte eingebracht, die für die vorliegende Erfindung jedoch nicht weiter relevant sind.

Fig. 4 zeigt einen Schnitt entlang der Quererstreckung des Fahrwerkslenkers 1 aus Fig. 3. Daraus lässt sich der vorliegend Pi-förmige Querschnitt des Strangpressprofils mit einem die Seitenstege 3 beiderseits leicht überragenden Bodensteg 2 erkennen. Die abstehenden Enden der Seitenstege 3 sind vorliegend nach außen gebogen. Die Versteifungsplatte 5 steht beiderseits leicht über die Seitenstege 3 hinaus. Wird die Versteifungsplatte 5 in das als Strangpressprofil ausgebildete Halbzeug in Querrichtung eingeschoben und anschließend das Strangpressprofil um eine Querachse verbogen, so scheren die Seitenstege 3 in die Versteifungsplatte 5 ein und bilden einen Formschluss aus.

Liste der Bezugszeichen:
- 1: Fahrwerkslenker
- 2: Bodensteg
- 3: Seitensteg
- 4: Aufnahme
- 5: Versteifungsplatte
- 6: Wulst

## Patentansprüche

1. Verfahren zur Herstellung eines Fahrwerkslenkers (1) für ein Fahrzeug, umfassend die folgenden Schritte:
- Bereitstellen eines Halbzeugs aus einem Strangpressprofil mit einem Bodensteg (2), von dem ausgehend zwei Seitenstege (3) unter Ausbildung eines dazwischenliegenden Freiraums abstehen;
- Einbringen jeweils einer Aufnahme (4) in die Seitenstege (3);
- Einführen einer Versteifungsplatte (5), die von den Aufnahmen (4) gehalten wird;
- Verformen der Seitenstege (3) zur Fixierung der Versteifungsplatte (5) in den Aufnahmen (4).

2. Verfahren nach Anspruch 1, **dadurch gekennzeichnet, dass** das Verformen der Seitenstege (3) durch ein Biegen des Strangpressprofils um eine Querachse erfolgt.

3. Verfahren nach Anspruch 1 oder 2, **dadurch gekennzeichnet, dass** das Verformen der Seitenstege (3) durch ein Eindrücken der Seitenstege (3) entlang einer Querachse des Strangpressprofils erfolgt.

4. Verfahren nach einem der Ansprüche 1 bis 3, **dadurch gekennzeichnet, dass** die Aufnahmen (4) als Durchbrüche in den Seitenstegen (3) ausgebildet sind.

5. Verfahren nach einem der Ansprüche 1 bis 3, **dadurch gekennzeichnet, dass** die Aufnahmen (4) als einander gegenüberliegende Nuten an den Innenseiten der Seitenstege (3) ausgebildet sind.

6. Verfahren nach Anspruch 5, **dadurch gekennzeichnet, dass** mindestens eine der Nuten in eine von dem entsprechenden Seitensteg (3) ausgebildete Wulst (6) eingebracht ist.

7. Verfahren nach Anspruch 6, **dadurch gekennzeichnet, dass** die Versteifungsplatte (5) durch Verformen der Wulst (6) mit einem Stempelwerkzeug fixiert wird.

8. Verfahren nach einem der Ansprüche 1 bis 7, **dadurch gekennzeichnet, dass** die Aufnahmen (4) der Längserstreckung des Fahrwerkslenkers (1) zumindest abschnittsweise folgen.

9. Fahrwerkslenker (1) für ein Fahrzeug, hergestellt mit einem Verfahren nach Anspruch 1.

10. Fahrwerkslenker (1) nach Anspruch 9, **dadurch gekennzeichnet, dass** das Strangpressprofil aus einer Aluminiumlegierung besteht.

## Claims

1. Method for producing a suspension link (1) for a vehicle, comprising the following steps:
- providing a semi-finished product made of an extruded profile with a bottom brace (2), proceeding from which two side braces (3) protrude forming a clearance therebetween;
- introducing a receiving portion (4) into the side braces (3);
- introducing a reinforcing plate (5) which is held by the receiving portions (4);
- deforming the side braces (3) to fix the reinforcing plate (5) into the receiving portions (4).

2. Method according to claim 1, **characterised in that** the deformation of the side braces (3) takes place by bending the extruded profile around a transverse axis.

3. Method according to claim 1 or 2, **characterised in that** the deformation of side the braces (3) takes place by pressing the side braces (3) along a transverse axis of the extruded profile.

4. Method according to any one of claims 1 to 3, **characterised in that** the receiving portions (4) are formed as breakthroughs into the side braces (3).

5. Method according to any one of claims 1 to 3, **characterised in that** the receiving portions (4) are formed on the insides of the side braces (3) as grooves opposing one another.

6. Method according to claim 5, **characterised in that** at least one of the grooves is introduced into a bead (6) formed by the corresponding side brace (3).

7. Method according to claim 6, **characterised in that** the reinforcing plate (5) is fixed by deforming the bead (6) with a stamping tool.

8. Method according to any one of claims 1 to 7, **characterised in that** the receiving portions (4), at least in sections, follow the longitudinal extension of the suspension link (1).

9. Suspension link (1) for a vehicle, produced with a method according to claim 1.

10. Suspension link (1) according to claim 9, **characterised in that** the extruded profile consists of an aluminium alloy.

## Revendications

1. Procédé de fabrication d'un bras de suspension (1) pour un véhicule, comprenant les étapes suivantes :
- la mise à disposition d'un demi-produit en un profilé extrudé avec une nervure de fond (2), de laquelle deux nervures latérales (3) dépassent en réalisant un espace libre intermédiaire ;
- l'introduction respectivement d'un logement (4) dans les nervures latérales (3) ;
- l'insertion d'une plaque de renfort (5) qui est maintenue par les logements (4) ;
- la déformation des nervures latérales (3) pour la fixation de la plaque de renfort (5) dans les logements (4).

2. Procédé selon la revendication 1, **caractérisé en ce que** la déformation des nervures latérales (3) est effectuée par un pliage du profilé extrudé autour d'un axe transversal.

3. Procédé selon la revendication 1 ou 2, **caractérisé en ce que** la déformation des nervures latérales (3) est effectuée par un enfoncement des nervures latérales (3) le long d'un axe transversal du profilé extrudé.

4. Procédé selon l'une quelconque des revendications 1 à 3, **caractérisé en ce que** les logements (4) sont réalisés en tant que perçages dans les nervures latérales (3).

5. Procédé selon l'une quelconque des revendications 1 à 3, **caractérisé en ce que** les logements (4) sont réalisés en tant que rainures opposées sur les côtés intérieurs des nervures latérales (3).

6. Procédé selon la revendication 5, **caractérisé en ce qu'**au moins une des rainures est introduite dans un bourrelet (6) réalisé par la nervure latérale (3) correspondante.

7. Procédé selon la revendication 6, **caractérisé en ce que** la plaque de renfort (5) est fixée par déformation du bourrelet (6) avec un outil de poinçonnage.

8. Procédé selon l'une quelconque des revendications 1 à 7, **caractérisé en ce que** les logements (4) suivent au moins par sections l'extension longitudinale du bras de suspension (1).

9. Bras de suspension (1) pour un véhicule, fabriqué avec un procédé selon la revendication 1.

10. Bras de suspension (1) selon la revendication 9, **caractérisé en ce que** le profilé extrudé se compose d'un alliage d'aluminium.
